Europäisches Patentamt

European Patent Office

Office européen des brevets

(19)

(11) Veröffentlichungsnummer: **0 163 325**
**B1**

(12) **EUROPÄISCHE PATENTSCHRIFT**

(45) Veröffentlichungstag der Patentschrift:
19.07.89

(51) Int. Cl.⁴: **C 09 D   5/08**

(21) Anmeldenummer: 85200413.4

(22) Anmeldetag: 19.03.85

(54) **Verfahren und Überzugsmittel zur Behandlung von Metalloberflächen.**

(30) Priorität: 21.03.84 JP 54789/84

(43) Veröffentlichungstag der Anmeldung:
04.12.85 Patentblatt 85/49

(45) Bekanntmachung des Hinweises auf die Patenterteilung: 19.07.89 Patentblatt 89/29

(84) Benannte Vertragsstaaten:
BE DE FR IT NL SE

(56) Entgegenhaltungen:
DE—A— 2 546 190
FR—A— 1 157 476
US—A— 4 138 276
US—A— 4 170 671

(73) Patentinhaber: NIHON PARKERIZING CO., LTD.
15-1, 1-Chome, Nihonbashi
Chuo-ku Tokyo 103 (JP)

(72) Erfinder: Fujii, Haruki
3-23, Miyanishi-Cho
Nishinomiya-Shi Hyogo-Ken (JP)
Erfinder: Shoji Ikada 2-1104 Evergreen Port-Island
2-6, 3-chome, Nakamachi Minatozima Chuo-Ku
Kobe-Shi Hyogo-Ken (JP)
Erfinder: Fukuda, Akimitsu
Ichikawa Park Heights 1005 2-1158-3, Ohono-Cho
Ichikawa-Shi Chiba-Ken (JP)
Erfinder: Okumura, Yasuo
114-6, Iyashiki Iwakura-Shi
Aichi-Ken (JP)

(74) Vertreter: Rieger, Harald, Dr.
Reuterweg 14
D-6000 Frankfurt am Main (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren und ein Überzugsmittel zur Behandlung der Oberflächen von mit einer Aluminium/Zink-Legierung versehenem Stahlblech.

In neuerer Zeit gewinnen mit Aluminium/Zink-Legierungen beschichtete Stahlbleche zunehmend an Bedeutung. Hierbei handelt es sich um Stahlblech, das mit einer Legierung beschichtet worden ist, die 4 bis 75 Gew.-% Aluminium und im übrigen Zink neben geringen Mengen von Drittbestandteilen, wie Silizium, Magnesium, Cer und Lanthan, enthält. Von besonderer Bedeutung sind derzeit zwei Typen: Stahlblech, das mit einer Legierung aus 4 bis 10 Gew.-% Aluminium, Rest überwiegend Zink, und geringfügigen Mengen von Magnesium oder Cer-Lanthan (Niedrig-Aluminium-Legierung) beschichtet ist, und Stahlblech, das mit einer Legierung aus 55 Gew.-% Aluminium, 43,4 Gew.-% Zink und 1,6 Gew.-% Silizium (Reich-Aluminium-Legierung) beschichtet ist. Verglichen mit dem üblicherweise verwendeten feuerverzinkten Stahlblech weisen bei gleicher Dicke der Beschichtung das mit Niedrig-Aluminium-Legierung beschichtete Stahlblech die überlegene Eigenschaft einer 1,5- bis 2-fachen und das mit Reich-Aluminium-Legierung beschichtete Stahlblech einer 3- bis 6-fachen Korrosionsbeständigkeit auf. Überdies ist das mit Reich-Aluminium-Legierung beschichtete Stahlblech auch hinsichtlich Hitzebeständigkeit und Wärmereflektion überlegen. Da mit derartigen Legierungen beschichtetes Stahlblech hervorragende Eigenschaften besitzt, findet es in jüngerer Zeit als Baustoff, wie Dach- und Wandmaterial, als Material im Straßenbau, wie Leitplanken, Lärmschutzwände, Schneefänge, Entwässerungsrinnen, als Material für Automobile, elektrische Haushaltsgeräte, Produktionsmaschinen und dergl., weiterhin als Grundblech für lackierte Stahlbleche usw., rasch Verbreitung.

Allerdings besitzt mit derartigen Aluminium/Zink-Legierungen beschichtetes Stahlblech wegen des Aluminiumgehaltes einen höheren Härtegrad als feuerverzinktes Stahlblech. Ein Nachteil seiner Härte ist, daß es bei der formenden Verarbeitung durch Walzen oder Pressen infolge geringer Schmierungseigenschaften zwischen dem beschichteten Stahlblech und den Formwalzen oder Preßwerkzeugen zu Zerstörungen der Beschichtung kommt und durch Reibungswärme zwischen den beiden Materialien die Beschichtung an den Formwalzen oder Preßwerkzeugen anfrittet. Als Folge hiervon kann sich von dem beschichteten Stahlblech Metallpulver lösen, das sich an Formwalzen oder Preßwerkzeugen festsetzt, in Winkeln der Formteile sammelt und dort anbäckt. Die auftretenden Schad- und Abrasionsstellen verändern zudem das äußere Bild des beschichteten Stahlbleches.

Zum Vermeiden dieser Schwierigkeiten hat man bisher versucht, der Oberfläche derart beschichteten Stahlblechs Gleitfähigkeit zu verleihen, um den Schlupf zwischen dem mit Aluminium/Zink-Legierung versehenen Stahlblech und den Formwalzen oder Preßwerkzeugen zu verbessern, indem man bei der formenden Verarbeitung Schmiermittel, wie Öl oder Wachs, durch Aufsprühen oder Aufrollen auftrug und außerdem Schmiermittel auf die Formwalzen oder Preßwerkzeuge gab. Die Verwendung derartiger Schmiermittel ist jedoch insofern nachteilig, als die Verarbeitung des Stahlbleches, z. B. als Dachmaterial, mit Unfallgefahren verbunden ist oder als es erforderlich ist, es nach dem Verformen im Falle einer vorgesehenen Lackierung vollständig zu entfernen. Auch ist es unvermeidbar, Walz- und Preßwerkzeuge gründlich zu reinigen, wenn eine Bearbeitung eines anderen, z. B. lackierten Blech- oder Bandmaterials beabsichtigt ist.

Zwar besitzt mit einer Aluminium/Zink-Legierung versehenes Stahlblech einen erheblich höheren Widerstand gegen Rost als feuerverzinktes Stahlblech, wenn sich aber einmal Rost gebildet hat, so verfärbt es sich — anders als bei der Veränderung durch den weißen Rost des feuerverzinkten Stahlbleches — grau bis schwarz. Das Aussehen wird mithin erheblich beeinträchtigt. Deshalb wird zur Verhinderung der Rostbildung durch Luftfeuchtigkeit, insbesondere während der Lagerung, die Oberfläche derartig beschichteter Stahlbleche ebenso wie die von feuerverzinktem Stahlblech häufig noch einer Chromatierbehandlung unterworfen. Neben der Chromatierung sind auch Behandlungen mit chromfreien Mitteln, z. B. mit Gerbsäuren, Phytinsäuren, Polyphosphorsäuren etc., durchgeführt worden, jedoch führen diese zu Produkten mit geringerer Korrosionsbeständigkeit. Auch unter dem Gesichtspunkt der Kosten sind diese Verfahren häufig zweifelhaft. Darüber hinaus sind Behandlungen der vorgenannten Art wegen der Härte der Beschichtung allein nicht ausreichend, wenn eine Verformung beabsichtigt ist. Hierzu bedarf es einer zusätzlichen Anwendung von z. B. Schmieröl.

Bei der Behandlung durch Umwandlungsüberzüge taucht die weitere Schwierigkeit auf, daß dann, wenn man das beschichtete Stahlblech mit wasserlöslichem Schmieröl behandelt hat, zusätzlich Maßnahmen zur Behandlung des Abwassers ergriffen werden müssen.

Aufgabe der Erfindung ist es, ein Verfahren bereitzustellen, das die Nachteile der bekannten Verfahren vermeidet und in der Lage ist, auf der Oberfläche von mit Aluminium/Zink-Legierungen versehenem Stahlblech einen Überzug zu bilden, der sowohl Schmierungseigenschaften als auch sehr gute Korrosionsbeständigkeit besitzt und zudem als Grundierung für den Auftrag von Farbe, Lack und dergl. dienen kann.

Die Aufgabe wird gelöst, indem das Verfahren der eingangs genannten Art entsprechend der Erfindung derart ausgestaltet wird, daß man auf die Oberfläche ein Überzugsmittel aufbringt, das ein wasserlösliches oder wasserdispergierbares Harz mit einer Säurezahl von 10 bis 200 und sechswertiges Chrom in einem Gewichtsverhältnis von 1 : 500 bis 1 : 10 (bezogen auf die festen Harzbestandteile)

2

enthält und einen pH-Wert von 3 bis 10 aufweist.

Als wasserlösliches oder wasserdispergierbares Harz mit einer Säurezahl von 10 bis 200 können Polyvinylacetat, Vinylacetat-Acrylsäureester, Vinylacetat-Äthylen, Acrylsäureester-Polymerisate, Acrylsäure-Styrol-Copolymerisate verwendet werden. Auch sind Copolymerisate von Vinylidenchlorid, Vinylchlorid, Polyäthylen, Epoxyharz, Butadien-Styrol-Latex und Butadien-Acrylonitril-Latex, die durch Einführen von Monomeren mit Carboxylgruppen, wie Acrylsäure, Methacrylsäure und Maleinsäure erhalten worden sind, geeignet. Die Harze können auch in Form von fertigen Emulsionen eingesetzt werden.

Wesentlich ist, daß die Säurezahl im Bereich von 10 bis 200 liegt. Die Säurezahl gibt die Anzahl der mg KOH an, die zur Neutralisation von 1 g des Harzes verbraucht wird. Liegt die Säurezahl des verwendeten Harzes unter 10, so sinkt wegen der nachlassenden Haftungsvermittlung die Eignung des Überzuges als Grundierungsüberzug für den direkt anschließenden Auftrag von Lack, Farbe und dergl. nach formender Verarbeitung des beschichteten Stahlbleches. Übersteigt die Säurezahl 200, so sinkt die Wasserbeständigkeit des Harzüberzuges, d. h. die Wasserdurchlässigkeit nimmt zu und die erwünschte Korrosionsbeständigkeit läßt sich nicht erreichen.

Als Verbindung des sechswertigen Chroms kann man Chromsäureanhydrid, Ammoniumbichromat, Kaliumbichromat, Natriumbichromat, Ammoniumchromat, Kaliumchromat, Natriumchromat und dergl. einsetzen. Es empfiehlt sich besonders, Chromsäureanhydrid zu verwenden, das keine bei Überzugsbildung leicht löslichen Salze entstehen läßt. Eine oder mehrere dieser Chromverbindungen werden mit dem wasserlöslichen oder wasserdispergierbaren Harz vermischt. Dabei ist es erforderlich, die Zuschlagsmenge so festzulegen, daß das sechswertige Chrom im Bereich eines Gewichtsverhältnisses von 1 : 500 bis 1 : 10 der festen Harzbestandteile, d. h. bei 0,2 bis 10 Gew.-Teilen pro 100 Gew.-Teile fester Harzbestandteile liegt. Beträgt die Zuschlagsmenge weniger als 1 : 500 der festen Harzbestandteile, so läßt sich eine Korrosionsbeständigkeit nicht erzielen und auch eine Beständigkeit gegen Schwarzverfärbung nicht erreichen. Werden mehr als 1 : 10 zugesetzt, so bilden die Harzteile ein Gel, so daß kein stabiles Überzugsmittel für das Überziehen des mit der Aluminium/Zink-Legierung versehenen Stahlbleches zur Verfügung steht.

Das aus der Beimischung von sechswertigen Chromverbindungen zu wasserlöslichem oder wasserdispergierbarem Harz erzielte Überzugsmittel wird auf einen pH-Wert im Bereich von 3 bis 10, vorzugsweise 4 bis 8, eingestellt. Liegt der pH-Wert der Behandlungslösung unter 3 oder übersteigt er 10, so werden das Zink und das Aluminium, da sie amphotere Metalle sind, aus der Aluminium/Zink-Legierungsschicht durch das Überzugsmittel aufgelöst und dringen in die Schicht des Überzugsmittels ein. Die Folge ist, daß die Härtbarkeit des Harzüberzuges nachläßt und sich die angestrebte Schmiereigenschaft nicht mehr erreichen läßt. Um den pH-Wert des Überzugsmittels auf einen Wert im genannten Bereich einzustellen, verwendet man üblicherweise alkalisch reagierende Stoffe. Besonders zweckmäßig sind in der Hitze flüchtige Verbindungen, wie Ammoniak oder Amine. Als Amine sind Monoäthylamin, Diäthylamin, Triäthylamin oder Alkanolamine, wie Monoäthanolamin, Diäthanolamin, Triäthanolamin, besonders geeignet.

Das Überzugsmittel wird auf übliche Weise auf das mit der Aluminium/Zink-Legierung versehene Stahlblech aufgetragen, nachdem dessen Oberfläche von Fett, Staub und dergl. gereinigt ist. Zum Auftragen kann man sich der üblichen Anstrichverfahren bedienen, nämlich Tauchen, Besprühen oder Bespritzen, Pinsel- oder Walzenauftrag. Der Auftrag kann auch elektrostatisch oder mit dem Luftmesser (air knife) erfolgen. Nach dem Auftrag wird das Überzugsmittel mit einem Heißlufttrockner, einem Infraroterhitzer, einem Induktionsofen oder dergl. aufgetrocknet.

Das Überzugsmittel kann man sowohl auf beide Seiten des mit der Aluminium/Zink-Legierung versehenen Stahlblechs als auch einseitig aufbringen.

Um gute Schmierungseigenschaften beim Walzen oder Pressen zu gewährleisten, wird in bevorzugter Ausgestaltung des erfindungsgemäßen Verfahrens das Überzugsmittel in einer derartigen Menge aufgebracht, daß ein Überzug mit 0,3 bis 5 g/m² Trockengewicht entsteht. Unter Einbezug des Gesichtspunktes der guten Schweißbarkeit, der Korrosionsbeständigkeit und der Wirtschaftlichkeit sind Überzüge mit 1 bis 3 g/m² Trockengewicht besonders vorteilhaft. Bei einem Überzugsgewicht unter 0,3 g/m² stellt sich das Problem, die gesamte Oberfläche des mit der Aluminium/Zink-Legierung versehenen Stahlbleches mit einem geschlossenen Überzug zu versehen. Auch ist die Korrosionsbeständigkeit nicht ausreichend hoch. Bei Überschreiten von 5,0 g/m² fällt die Schweißbarkeit des Bleches ab.

Das erfindungsgemäße Verfahren wird üblicherweise in den Herstellungsprozeß derart integriert, daß man das Stahlblech durch ein Bad der Aluminium/Zink-Legierung führt und dabei mit einer Legierungsauflage versieht, abkühlt, dann in einer Anlage die Oberfläche, z. B. in einer Walzanlage, dressiert und gegebenenfalls entspannt und dadurch die Beschaffenheit des mit der Aluminium/Zink-Legierung versehenen Stahlblechs verbessert. Anschließend wird das Überzugsmittel aufgebracht und aufgetrocknet. Schließlich wird das beschichtete Band gekühlt und aufgewickelt.

Bestandteil der Erfindung ist auch ein Überzugsmittel zur Bebandlung von mit einer Aluminium/Zink-Legierung versehenen Stahloberflächen, das sich dadurch auszeichnet, daß es wasserlösliches oder wasserdispergierbares Harz mit einer Säurezahl von 10 bis 200 und sechswertiges Chrom in einem Gewichtsverhältnis von 1 : 500 bis 1 : 10 (bezogen auf die festen Harzbestandteile) enthält und einen pH-Wert von 3 bis 10 aufweist.

Vorzugsweise weist das Überzugsmittel einen pH-Wert von 4 bis 8 auf.

Die Erfindung gestattet es, Stahlbleche, die mit einer Aluminium/Zink-Legierung versehen sind, in einfacher Weise mit einem Überzug zu versehen, der hohe Korrosionsbeständigkeit vermittelt und gute Schmiereigenschaft aufweist, so daß beim Formen durch Walzen oder Pressen auf die Verwendung gesonderter Schmiermittel verzichtet werden kann, ohne daß sich pulverförmiger Metallabrieb bildet. Hierdurch wird eine Entfernung des sonst nötigen Schmiermittels von der Metalloberfläche und von den Verformungswerkzeugen entbehrlich. Darüber hinaus stellt der Überzug eine gute Basis für die anschließende Aufbringung von Lack, Farbe und dergl. dar.

Die Erfindung wird anhand der folgenden Beispiele und Figuren, die im Vergleichsbeispiel 5 beschrieben sind, näher und beispielsweise erläutert.

### Durchführungsbeispiel 1

Es wurde ein mit Aluminium/Zink-Legierung versehenes Stahlblech einer Dicke von 0,8 mm und einer Breite von 914 mm, dessen Legierung 55 Gew.-% Aluminium, 43,4 Gew.-% Zink und 1,6 Gew.-% Silizium enthielt, und mit einem Beschichtungsgewicht von einseitig 90 g/m² eingesetzt. Als Überzugsmittel diente ein Gemisch von 500 g/l Acrylsäureester, Methacrylsäureester und Acrylsäure-Copolymerisat (40 Gew.-% feste Harzbestandteile, Säurezahl 40) mit 5 g/l Chromsäureanhydrid. Der mit Ammoniakwasser eingestellte pH-Wert betrug 6,5.

Nach Entfetten der oben näher bezeichneten Stahlbleche wurde das Überzugsmittel mit der Walze derart aufgetragen, daß sich ein Überzug mit einem Trockengewicht von 2 g/m² und einem Chromgewicht von 25 g/m² (berechnet als Cr) ergab. Danach wurde sofort mit Heißluft von 120 °C innerhalb von 9 sec die Schicht ausgebildet. Die maximale Blechtemperatur erreichte 60 °C. Das behandelte Blech wurde abgekühlt und für die nachfolgend erläuterten Tests verwendet.

### Durchführungsbeispiel 2

Es wurde ein mit Aluminium/Zink-Legierung versehenes Stahlblech einer Blechdicke von 0,4 mm und einer Breite von 190 mm verwendet. Die Zusammensetzung der aufgebrachten Legierung war 55 Gew.-% Aluminium, 43,4 Gew.-% Zink und 1,6 Gew.-% Silizium. Das Beschichtungsgewicht betrug einseitig 80 g/m². Die Ausbildung und Beschaffenheit des Überzugsmittels erfolgte entsprechend dem Durchführungsbeispiel 1.

### Vergleichsbeispiel 1

Hierzu dienten die gleichen, mit einer Aluminium/Zink-Legierung versehenen Stahlbleche des Durchführungsbeispiels 2. Sie wurden ohne Behandlung mit einem Überzugsmittel, lediglich entfettet, als Testbleche eingesetzt.

### Vergleichsbeispiel 2

Auf die gleichen, lediglich entfetteten, mit der Aluminium/Zink-Legierung versehenen Stahlbleche wie im Durchführungsbeispiel 2 wurde eine Chromatierungslösung, die 10 g/l Chromsäure und 1 g/l Fluorid enthielt, ebenso wie im Durchführungsbeispiel 1 aufgewalzt. Anschließend wurde die Lösung wie im Durchführungsbeispiel 1 aufgetrocknet. Gemäß Röntgenfluoreszensmessung betrug die auf die Testbleche aufgebrachte Chrommenge 5 mg/m² (berechnet als Cr).

### Vergleichsbeispiel 3

Auf die gemäß Vergleichsbeispiel 2 behandelten Bleche wurde durch Aufsprühen einer Wachsemulsion (Johnson Nr. 700, Fabrikat der Firma Johnson, 15-fach mit Wasser verdünnt) ein Flüssigkeitsfilm von 15 ml/m² aufgetragen und dieser aufgetrocknet.

### Vergleichsbeispiel 4

Ebenfalls gemäß Vergleichsbeispiel 2 behandelte Bleche wurden mit einer Mineralöl/Wachs-Emulsion (Cindol 3411, Fabrikat der Firma Houghton) durch Aufsprühen versehen. Die Flüssigkeitsmenge betrug 15 ml/m². Danach wurde getrocknet.

### Vergleichsbeispiel 5

Es wurden feuerverzinkte Stahlbleche einer Blechdicke von 0,4 mm und einer Breite von 190 mm sowie mit einer Beschichtungsmenge nach JIS-Normen Z 25 eingesetzt. Zunächst wurde ihre Oberfläche mit einem schwach alkalischen Entfettungsmittel (Parcocleaner 342 (Reg. Wz.), Fabrikat Nihon Parkerizing) durch 20 sec langes Sprühen bei 60 °C entfettet, dann durch 10 sec langes Sprühen mit Wasser gespült und anschließend heißluftgetrocknet. Abschließend wurden sie einer Chromatierbehandlung, wie im Vergleichsbeispiel 2, unterzogen.

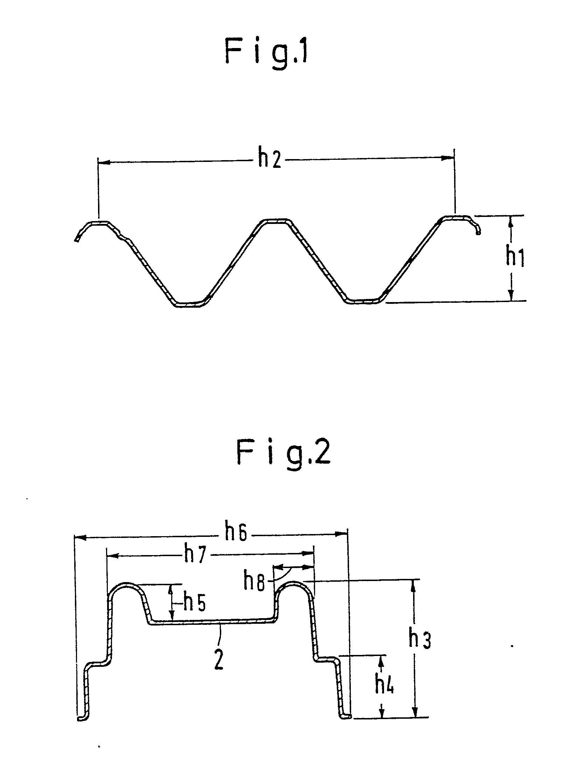

Die nach den Durchführungsbeispielen 1 und 2 sowie den Vergleichsbeispielen 1, 2, 3, 4 und 5 gewonnenen Testbleche wurden jeweils auf ihre Eignung zur Walzformung, Korrosionsbeständigkeit, Verfärbungsbeständigkeit (Beständigkeit gegen Schwarzverfärbung) und Eignung zum direkten Farbauftrag getestet. In dem Test zur Eignung zur Walzformung wurde im Falle des Blechs des Durchführungsbeispiels 1 Testblech von 1.500 m Länge von der Rolle mit einer Vorlaufgeschwindigkeit von 50 m/min abgewickelt, durch Walzen zu einem Profil eines Querschnitts, wie in Abb. 1 dargestellt (Profilhöhe $h_1$ = 130 mm sowie Arbeitsbreite $h_2$ = 550 mm), geformt. Es wurden die Metallmitnahme (metal pick-up) durch die Walzen sowie das Aussehen des Formstückes beurteilt.

Auf die gleiche Weise und mit denselben Walzen wurde weißlackiertes Zinkblech geformt und die auf dieses Zinkblech übertragene Verschmutzung nach Augenschein beurteilt.

Jeweils 250 Testbleche einer Länge von 2 m und gemäß Durchführungsbeispiel 2 und den Vergleichsbeispielen 1, 2, 3, 4 und 5 bebandelt, wurden mit einer Vorlaufgeschwindigkeit von 50 m/min zu Profilen eines Querschnittes — wie in Abbildung 2 wiedergegeben — ($h_3$ = 44 mm, $h_4$ = 19 mm, $h_5$ = 12 mm, $h_6$ = 91 mm, $h_7$ = 67 mm und $h_8$ = 12 mm) walzgeformt. Die Beurteilung erfolgte wie oben angegeben. Die einzelnen Beurteilungsmaßstäbe sind in Tabelle 1 zusammengestellt.

Tabelle 1

| Bewer- tung | Metallmitnahme | Aussehen des Formstücks | Verschmutzung weißlackierten Zinkblechs |
|---|---|---|---|
| '' | gut; kein Anhaften von Metallfeinpulver an den Walzen | gut | gut; keine Verschmutzung |
| △ | Anhaften von Metallfeinpulver an den Walzen | an einem Teil der Profilkanten entstehen Metallmarken | --- |
| x | Metall bäckt an den Walzen an | neben Bildung von Metallmarken entstehen Flecken von Oberflächen- behandlungsmittel | Auftreten von Verschmutzungen |

Des weiteren wurden Versuche zur Korrosionsbeständigkeit nach dem Salzsprühtest gemäß JIS Z 2371 vorgenommen. Außerdem wurden als Test zur Ermittlung der Beständigkeit gegen Schwarzverfärbung jeweils zwei auf 0,4 × 60 × 150 mm Größe geschnittene Testbleche 1 Stunde im Kühlschrank bei 5 °C gelagert und herausgenommen. Sofort nach Beschlagen mit Luftfeuchtigkeit wurden die Testflächen der beiden Testbleche aneinandergelegt, in einseitig vinylbeschichtetes Papier gewickelt, so gelegt, daß sie durch Gewichte entsprechend einem Druck von 70 kg/cm² belastet werden konnten, und für 7 Tage in ein Feuchtigkeits-Testgerät mit 95 % relativer Luftfeuchtigkeit bei 50 °C gelegt. Alsdann wurde die Bildung von Schwarzverfärbungen nach Augenschein beurteilt. Die Beurteilungsmaßstäbe für die Korrosionsbeständigkeit und die Verfärbungsbeständigkeit (Beständigkeit gegen Schwarzverfärbung) sind in Tabelle 2 wiedergegeben.

Tabelle 2

| Bewertung | Korrosions- beständigkeit | Beständigkeit gegen Schwarzverfärbung |
|---|---|---|
| | Flächen mit Bil- dung vom weißem Rost | Flächen mit Schwarz- verfärbung |
| 5 | 0 % | 0 % |
| 4 | bis 10 % | bis 10 % |
| 3 | 11 bis 25 % | 11 bis 25 % |
| 2 | 26 bis 50 % | 26 bis 50 % |
| 1 | 51 % und mehr | 51 % und mehr |

Zur Ermittlung der Eignung zum direkten Farbauftrag (Lackiereigenschaft) wurde auf die Testbleche Aminoalkydfarbe (Aminolaquer No. 1, Fabrikat Kansai Paint Co., Ltd.) so aufgetragen, daß sich eine Dicke der getrockneten Farbschicht von 20 μm mit einem Bleistift-Härtegrad von 2 H ergab. Die Bewertung erfolgte nach dem Gitterschnitt-Test. Hierzu wurden in die lackierten Testbleche mit einem scharfen Messer längs und quer je 11 Linien im Abstand von 1 mm so eingeschnitten, daß sie den Untergrund erreichten und 100 Schachbrettfelder ergaben. Dann wurde auf die Fläche Klebeband (Zellophan-Klebeband) aufgedrückt und nach heftigem Abreißen die Zahl der zurückbleibenden Felder der Farbschicht ausgezählt.

Die Ergebnisse der oben beschriebenen Tests zur Ermittlung der Walzverformbarkeit, der Korrosionsbeständigkeit, der Beständigkeit gegen Schwarzverfärbung und der Eignung für den direkten Farbauftrag sind in Tabelle 3 wiedergegeben.

Tabelle 3

| Test-punkt: / Test-blech: | Walzform – Eignung | | | Korro-sions-bestän-digkeit (Std.) 72 Std. | Bestän-digkeit gegen Schwarz-verfär-bung | Eignung für direkten Farbauftrag Gitterschnitt |
|---|---|---|---|---|---|---|
| | Metall-mitnahme | Aussehen des Form-stücks | Ver-schmut-zung weiß lackierten Zink-blechs | | | |
| Durchführungs-beispiel 1 | o | o | o | 5 | 5 | 100/100 |
| " 2 | o | o | o | 5 | 5 | 100/100 |
| Vergleichs-beispiel 1 | x | Δ | x | 1 | 3 | 85/100 |
| " 2 | x | Δ | x | 4 | 5 | 85/100 |
| " 3 | Δ | x | x | 3 | 4 | Farbabstoßung; keine gleichmäßige Anstrichschicht zu erzielen |
| " 4 | Δ | x | x | 3 | 4 | wie vor |
| " 5 | Δ | Δ | x | 1 | 3 | 96/100 |

EP 0 163 325 B1

Die Ergebnisse nach Tabelle 3 bestätigen, daß die Produkte nach den Durchführungsbeispielen 1 und 2 sowohl hinsichtlich Walzformeignung als auch Korrosionsbeständigkeit, Beständigkeit gegen Schwarzverfärbung und Eignung zum direkten Farbauftrag hervorragend sind.

**Patentansprüche**

1. Verfahren zur Behandlung der Oberflächen von mit einer Aluminium/Zink-Legierung versehenem Stahlblech, dadurch gekennzeichnet, daß man auf die Oberfläche ein Überzugsmittel aufbringt, das ein wasserlösliches oder wasserdispergierbares Harz mit einer Säurezahl von 10 bis 200 und sechswertiges Chrom in einem Gewichtsverhältnis von 1 : 500 bis 1 : 10 (bezogen auf die festen Harzbestandteile) enthält und einen pH-Wert von 3 bis 10 aufweist.

2. Verfahren nach Anspruch 1, dadurch gekennzeichnet, daß man auf die Oberfläche ein Überzugsmittel aufbringt, das einen pH-Wert von 4 bis 8 aufweist.

3. Verfahren nach Anspruch 1 oder 2, dadurch gekennzeichnet, daß man auf die Oberfläche das Überzugsmittel in einer derartigen Menge aufbringt, daß ein Überzugsgewicht mit 0,3 bis 5 g/m², vorzugsweise 1 bis 3 g/m², Trockengewicht entsteht.

4. Überzugsmittel zur Behandlung der Oberfläche von mit einer Aluminium/Zink-Legierung versehenem Stahlblech, dadurch gekennzeichnet, daß es ein wasserlösliches oder wasserdispergierbares Harz mit einer Säurezahl von 10 bis 200 und sechswertiges Chrom mit einem Gewichtsverhältnis von 1 : 500 bis 1 : 10 (bezogen auf die festen Harzbestandteile) enthält und einen pH-Wert von 3 bis 10 aufweist.

5. Überzugsmittel nach Anspruch 4, dadurch gekennzeichnet, daß es einen pH-Wert von 4 bis 8 aufweist.

**Claims**

1. Process for treating surfaces of aluminum/zinc alloy plated steel sheet, characterized in that on the surface a coating composition is applied containing a water-soluble or water-dispersible resin having an acid value of 10 to 200 and hexavalent chromium in a weight ratio of 1 : 500 to 1 : 10 (calc. as solid constituent of the resin) and having a pH-value of 3 to 10.

2. Process according to claim 1 characterized in that on the surfaces a coating composition is applied having a pH-value of 4 to 8.

3. Process according to claim 1 or 2, characterized in that one the surfaces a coating composition is applied in such a quantity that a coating weight of 0,3 to 5 g/m², preferably of 1 to 3 g/m² (calc. as a dry film) is obtained.

4. Coating composition for treating surfaces of aluminum/zinc alloy plated steel sheet, characterized in that it contains a water-soluble or water-dispersible resin having an acid value of 10 to 200 and hexavalent chromium in a weight ratio of 1 : 500 to 1 : 10 (calc. as solid constituent of the resin) and has a pH-value of 3 to 10.

5. Coating composition according to claim 4 characterized in that it has a pH-value of 4 to 8.

**Revendications**

1. Procédé de traitement des surfaces d'une tôle d'acier munie d'un alliage aluminium/zinc, caractérisé en ce qu'on applique sur la surface un agent de revêtement qui contient une résine soluble dans l'eau ou dispersable dans l'eau ayant un indice d'acide de 10 à 200 et du chrome hexavalent dans un rapport pondéral da 1 : 500 à 1 : 10 (par rapport aux constituants solides da la résine) et présente un pH de 3 à 10.

2. Procédé suivant la revendication 1, caractérisé en ce qu'on applique sur la surface un agent de revêtement qui présente un pH de 4 à 8.

3. Procédé suivant la revendication 1 ou 2, caractérisé en ce qu'on applique sur la surface l'agent de revêtement en une quantité telle qu'il se forme un poids de revêtement d'un poids sec de 0,3 à 5 g/m², de préférence de 1 à 3 g/m².

4. Agent de revêtement pour le traitement de la surface d'une tôle d'acier munie d'un alliage aluminium/zinc, caractérisé en ce qu'il contient une résine soluble dans l'eau ou dispersable dans l'eau ayant un indice d'acide de 10 à 200 et du chrome hexavalent dans un rapport pondéral de 1 : 500 à 1 : 10 (par rapport aux constituants solides de la résine) et présente un pH de 3 à 10.

5. Agent de revêtement suivant la revendication 4, caractérisé en ce qu'il présente un pH de 4 à 8.

# Fig.1

# Fig.2